# EUROPEAN PATENT APPLICATION

(11) **EP 1 920 836 A1**
(43) Date of publication of application: **14.05.2008**
(21) Application number: 06123099.1
(22) Date of filing: 27.10.2006
(51) Int. Cl.: B01J 23/75, B01J 23/94, B01J 38/16, B01J 38/48, B01J 38/56, B01J 23/656

(54) **Process for regenerating a cobalt catalyst**

(71) Applicant: SHELL INTERNATIONALE RESEARCH MAATSCHAPPIJ B.V., 2596 HR Den Haag (NL)
(72) Inventor: Reynhout, Marinus Johannes, 1031 CM Amsterdam (NL)
(74) Representative: Zeestraten, Albertus W. J.

(57) **Abstract**

A process for the regeneration of a cobalt-based catalyst which has been poisoned by contact with hydrogen sulphide. The process comprises the preferably in situ treatment of the poisoned catalyst with a stream containing steam and oxygen at a pressure of 5-40 bar and a temperature of 100-400 °C thus converting sulphur contaminants such as cobalt sulphide to soluble compounds, such as cobalt sulphate. The resulting soluble sulphates typically agglomerate and may or may not be removed by washing the reactor with water or any other suitable solvent. The process can be used to mitigate the effects of sulphur poisoning on a cobalt based Fischer-Tropsch catalyst.

## Description

This invention relates to a process for regenerating a cobalt based catalyst for use in a Fischer-Tropsch process, in which the catalyst has been poisoned by sulphur contamination.

Many documents are known describing methods and processes for the catalytic conversion of (gaseous) hydrocarbonaceous feedstocks, especially methane, natural gas and/or associated gas, into liquid products, especially methanol and liquid hydrocarbons, particularly paraffinic hydrocarbons.

The Fischer-Tropsch process can be used for the conversion of synthesis gas (from hydrocarbonaceous feed stocks) into liquid and/or solid hydrocarbons. Generally, the feed stock (e.g. natural gas, associated gas and/or coal-bed methane, heavy and/or residual oil fractions, coal, biomass) is converted in a first step into a mixture of hydrogen and carbon monoxide (this mixture is often referred to as synthesis gas or syngas). The synthesis gas is then fed into one or more reactors where it is converted in one or more steps over a suitable catalyst at elevated temperature and pressure into paraffinic compounds ranging from methane to high molecular weight modules comprising up to 200 carbon atoms, or, under particular circumstances, even more. Preferably the amount of C₅₊ hydrocarbons produced is maximised and the amount of methane and carbon dioxide is minimised.

The Fischer-Tropsch process is a catalysed process. One preferred catalyst for the process comprises a cobalt active phase supported on a porous refractory oxide such as silica or titania. Manganese or vanadium may be added as promoters. A number of contaminants or by-products may deposit on, or react with the Fischer-Tropsch catalyst. These include inter alia carbon deposits, oxidation of the cobalt to form catalytically inactive cobalt oxides and reaction with hydrogen sulphide to form a family of catalytically inactive cobalt sulphate species - CoSₓ such as CoS₂. These compromise the activity of the catalyst.

The presence of cobalt sulphide species, resulting from the presence of small amounts of hydrogen sulphide in the feed synthesis gas stream, is particularly problematic. The cobalt towards the outer surface of the catalyst particles is converted to inactive cobalt sulphide which not only renders the converted cobalt inactive but also blocks access to the inner pores of the catalyst particles and the pure cobalt. Thus even traces of H₂S can significantly reduce the activity of cobalt based Fischer-Tropsch catalysts by poisoning the cobalt surfaces.

To mitigate the problems with contamination, the catalyst is periodically regenerated often in situ. In general, regeneration is designed to remove contaminants and allow the catalyst to regain much of its lost activity. Whilst such conventional regeneration is successful in removing certain contaminants, the CoSₓ species remain. Extracting cobalt from this stable family of species requires temperatures in excess of 700 °C which is uneconomical and beyond the temperature rating of a Fischer-Tropsch reactor.

US 6,300,268 discloses such a method for regenerating sulphur-contaminated cobalt catalysts. However the temperatures required are relatively high which can be uneconomical and beyond the temperature rating of a particular Fischer-Tropsch reactor. Thus there is no satisfactory method to remove CoSₓ from a cobalt based catalyst used in a Fischer-Tropsch reactor. Instead, measures are taken to remove the hydrogen sulphide or other sulphur containing compounds from the synthesis gas feed stream before it enters the Fischer-Tropsch reactor and contacts the cobalt based catalyst. Nevertheless, on occasion, sulphur based compounds will proceed into the Fischer-Tropsch reactor and poison the catalyst.

An object of the present invention is to provide a process to regenerate a cobalt based catalyst following sulphur poisoning.

According to a first aspect of the present invention, there is provided a process for the regeneration of a cobalt-based catalyst having sulphur contaminants, the process comprising:
contacting said catalyst with a stream containing steam and oxygen, the stream being at a pressure of 5-80 bar and at a temperature of 100-400 °C;
thus converting the sulphur contaminants to soluble compounds.

The resulting soluble compounds may be removed typically by contact with a solvent such as water, especially a water/hydrocarbon emulsion. However this so-called washing step is not essential because the soluble compounds can agglomerate and allow access to the pure cobalt in the catalyst particles even if localised soluble and inactive crystals remain. Typically the steam causes such agglomeration. For embodiments where the soluble compounds are removed by a washing step, then agglomeration is not essential.

Such treatment will also typically oxidise the pure cobalt to cobalt oxide, for example Co₃O₄ or other cobalt-oxygen-hydrogen containing particles. This oxidation can be reversed by conventional hydrogen reduction after the oxidation. The hydrogen reduction may also cause the soluble compounds to return to the sulphur contaminants, but since they are localised they do not obstruct access to the cobalt inside the particles and the activity of the catalyst is increased compared to the catalyst with the sulphur contaminants before regeneration.

Thus the conversion of the sulphur contaminants to soluble compounds is achieved by the combination of steam and oxygen in marked contrast to US 6,300,268 where oxygen and high temperatures are used to oxidise the sulphur before a washing step.

The sulphur contaminants are typically cobalt sulphide contaminants.

The soluble compounds may comprise cobalt sulphate, typically cobalt sulphate crystals. The cobalt sulphate crystals may be bieberite crystals or any other type of cobalt sulphate crystals. In particular, the bieberite crystalline form of cobalt sulphate has a minimum solubility in water between 100 and 150 °C. Therefore it is possible to concentrate that compound in a controlled way and so agglomerate large crystals which may be of the order of 1000 times greater than cobalt sulphide crystals and are therefore more localised. Therefore, in contrast to cobalt sulphide crystals which tend to seal the catalyst particles largely preventing reactant access to the active cobalt particles, the cobalt sulphate crystals will agglomerate and localise thus allowing access to the active cobalt particles. If converted back to cobalt sulphide during catalyst reduction, the crystals remain localised thus allowing access to the active cobalt particles.

The washing step, if performed, is preferably performed at around 20-100 °C. Any suitable solvent may be used typically water optionally with a small amount of hydrocarbon therein to form an emulsion.

The cobalt sulphide contaminants may be any cobalt sulphide compounds including CoS (jaipurite), CoS₂ (cattiente), Co₃S₄ (linnraeite) and especially CoS₄.

The cobalt sulphate compounds may be any cobalt sulphate compound including CoSO₄, CoSO₃, CoSO₄.H₂0 (cobalt kieserite), CoSO₄.5H₂0 (cobalt chalcantite), and especially CoSO₄.7H₂0 (cobalt bieberite).

Thus in the washing step, if performed, some cobalt (typically in the form of a cobalt sulphate) will be lost. Typically for each 1g of S removed, ~2g of cobalt will be removed. For example, catalyst at the top of a reactor tube may contain around 0.3% sulphur contamination which will be removed along with around 0.6 wt% cobalt.

If the washing step is not performed an equivalent amount of cobalt may be agglomerated and deactivated. For example, 0.6 wt% of cobalt may be deactivated if the contaminated catalyst includes 0.3 wt% sulphur.

Preferably the temperature of the stream is between 150-350 °C more preferably 200-300 °C.

Preferably the pressure of the stream is 10-70 bar, preferably 40-70 bar, especially around 60 bar.

The stream may comprise air. Preferably the stream has a humidity of at least 50%, more preferably the stream is saturated with the steam. Typically the pressure is created by the steam.

Preferably said oxygen and steam are added at the same time optionally with a pre-treatment of an oxygen containing gas (which does not contain steam) typically in order to convert the active cobalt to a spinel cobalt oxide. The oxygen containing gas for the pre-treatment may be a mixture of nitrogen and oxygen in which the concentration of oxygen is increased stepwise to encourage oxidation of the cobalt and preferably until all cobalt has been oxidised.

Preferably the regeneration is carried out in situ that is in a Fischer-Tropsch reactor. The reactor is typically taken offline for a period of time whilst the regeneration takes place. Preferably the reactor is a multi-tubular fixed bed reactor.

In a multitubular reactor the sulphur contaminants typically accrue towards the top of the reactor tubes since they will normally react immediately with cobalt when they enter the tubes. In use, catalyst activity normally diminishes over time for a variety of reasons including contamination and sintering. Sintering is more common at the bottom of the reactor tubes and so activity tends to be less at the bottom of the reactor tubes compared to the activity at the top. Embodiments of the invention can also serve to displace the sulphur impurities from the top of the reactor tube to the bottom of the reactor tube thus improving the activity of the higher activity catalyst at the top of the reactor tube; over and above the agglomeration effects described above.

The cobalt is typically supported on a carrier which is preferably in a crystalline form, more preferably a porous carrier. The porous carrier may be selected from any of the suitable refractory metal oxides or silicates or combinations thereof known in the art. Particular examples of preferred porous carriers include silica, alumina, titania, zirconia, ceria, gallia and mixtures thereof, especially silica, alumina and titania.

The catalytically active metal and the promoter, if present, may be formed with the support material by any suitable treatment, such as dispersing or co-milling. Alternatively, impregnation, kneading and extrusion may be used. After deposition of the cobalt and, if appropriate, the promoter on the support material, the loaded support is typically subjected to drying and/or to calcination at a temperature of generally from 350 to 750 °C, preferably a temperature in the range of from 450 to 600 °C. The effect of the calcination treatment is to remove chemically or physically bonded water such as crystal water, to decompose volatile decomposition products and to convert organic and inorganic compounds to their respective oxides. After calcination, the resulting catalyst is usually activated by contacting the catalyst with hydrogen or a hydrogen-containing gas, typically at temperatures of about 200 to 450 °C.

Typically, the amount of cobalt present in the catalyst may range from 1 to 100 parts by weight per 100 parts by weight of support material, preferably from 3 to 50 parts by weight per 100 parts by weight of support material.

The cobalt may be present in the catalyst together with one or more metal promoters or co-catalysts. The promoters may be present as metals or as the metal oxide, depending upon the particular promoter concerned. Suitable promoters include oxides of metals from Groups IIA, IIIB, IVB, VB, VIB and/or VIIB of the Periodic Table, oxides of the lanthanides and/or the actinides. Preferably, the catalyst comprises at least one of an element in Group IVB, VB, VIIB and/or VIII of the Periodic Table, in particular titanium, zirconium, manganese and/or vanadium, especially manganese or vanadium. As an alternative or in addition to the metal oxide promoter, the catalyst may comprise a metal promoter selected from Groups VIIB and/or VIII of the Periodic Table. Preferred metal promoters include rhenium, manganese, iron, platinum and palladium.

The promoter, if present in the catalyst, is typically present in an amount of from 0.001 to 100 parts by weight per 100 parts by weight of support material, preferably 0.05 to 20, more preferably 0.1 to 15. It will however be appreciated that the optimum amount of promoter may vary for the respective elements which act as promoter.

One particularly preferred Fischer-Tropsch catalyst, which may be regenerated according to the present invention, comprises a manganese or zirconium promoter on a titania support.

The Fischer-Tropsch process is well known to those skilled in the art and involves synthesis of hydrocarbons from syngas, by contacting the syngas at reaction conditions with the Fischer-Tropsch catalyst.

The synthesis gas can be provided by any suitable means, process or arrangement. This includes partial oxidation and/or reforming of a hydrocarbonaceous feedstock as is known in the art.

Typically the synthesis gas is produced by partial oxidation of a hydrocarbonaceous feed. The hydrocarbonaceous feed suitably is methane, natural gas, associated gas or a mixture of C1-4 hydrocarbons. The feed comprises mainly, i.e. more than 90 v/v%, especially more than 94%, C1-4 hydrocarbons, especially comprises at least 60 v/v percent methane, preferably at least 75 percent, more preferably 90 percent. Very suitably natural gas or associated gas is used. As described above, any sulphur in the feedstock is preferably removed or at least minimised.

The partial oxidation of gaseous feedstocks, producing mixtures of especially carbon monoxide and hydrogen, can take place according to various established processes. These processes include the Shell Gasification Process. A comprehensive survey of this process can be found in the Oil and Gas Journal, September 6, 1971, pp 86-90.

The oxygen containing gas for the partial oxidation typically contains at least 95 vol.%, usually at least 98 vol.%, oxygen. Oxygen or oxygen enriched air may be produced via cryogenic techniques, but could also be produced by a membrane based process, e.g. the process as described in WO 93/06041. A gas turbine can provide the power for driving at least one air compressor or separator of the air compression/separating unit. If necessary, an additional compressing unit may be used after the separation process, and the gas turbine in that case may also provide at the (re)start power for this compressor. The compressor, however, may also be started at a later point in time, e.g. after a full start, using steam generated by the catalytic conversion of the synthesis gas into hydrocarbons.

To adjust the H₂/CO ratio in the syngas, carbon dioxide and/or steam may be introduced into the partial oxidation process. Preferably up to 15% volume based on the amount of syngas, preferably up to 8% volume, more preferable up to 4% volume, of either carbon dioxide or steam is added to the feed. Water produced in the hydrocarbon synthesis may be used to generate the steam. As a suitable carbon dioxide source, carbon dioxide from the effluent gasses of the expanding/combustion step may be used. The H₂/CO ratio of the syngas is suitably between 1.5 and 2.3, preferably between 1.6 and 2.0. If desired, (small) additional amounts of hydrogen may be made by steam methane reforming, preferably in combination with the water gas shift reaction. Any carbon monoxide and carbon dioxide produced together with the hydrogen may be used in the gasification and/or hydrocarbon synthesis reaction or recycled to increase the carbon efficiency. Hydrogen from other sources, for example hydrogen itself, may be an option.

The syngas comprising predominantly hydrogen, carbon monoxide and optionally nitrogen, carbon dioxide and/or steam is contacted with a suitable catalyst in the catalytic conversion stage, in which the hydrocarbons are formed. Suitably at least 70 v/v% of the syngas is contacted with the catalyst, preferably at least 80%, more preferably at least 90%, still more preferably all the syngas.

The Fischer-Tropsch synthesis is preferably carried out at a temperature in the range from 125 to 350 °C, more preferably 175 to 275 °C, most preferably 200 to 260 °C. The pressure preferably ranges from 5 to 150 bar abs., more preferably from 5 to 80 bar abs.

The Fischer-Tropsch tail gas may be added to the partial oxidation process.

The Fischer-Tropsch process can be carried out in a slurry phase regime or an ebullating bed regime, wherein the catalyst particles are kept in suspension by an upward superficial gas and/or liquid velocity.

Another regime for carrying out the Fischer-Tropsch process is a fixed bed regime, especially a trickle flow regime. A very suitable reactor is a multitubular fixed bed reactor. In addition, the Fischer-Tropsch process may also be carried out in a fluidised bed process.

Thus the present invention also provides a process for the production of liquid hydrocarbons from synthesis gas, the process comprising:
- converting synthesis gas in a reactor into liquid hydrocarbons, and optionally solid hydrocarbons and optionally liquefied petroleum gas, at elevated temperatures and pressures;
- pausing said conversion of the synthesis gas;
- regenerating the catalyst as described herein;
- continuing said conversion of the synthesis gas.

Preferably the regeneration is conducted in the same reactor as the conversion of the synthesis gas.

Products of the Fischer-Tropsch synthesis may range from methane to heavy paraffin waxes. Preferably, the production of methane is minimised and a substantial portion of the hydrocarbons produced have a carbon chain length of a least 5 carbon atoms. Preferably, the amount of C₅₊ hydrocarbons is at least 60% by weight of the total product, more preferably, at least 70% by weight, even more preferably, at least 80% by weight, most preferably at least 85% by weight.

The hydrocarbons produced in the process are suitably C3-200 hydrocarbons, more suitably C4-150 hydrocarbons, especially C5-100 hydrocarbons, or mixtures thereof. These hydrocarbons or mixtures thereof are liquid or solid at temperatures between 5 and 30 °C (1 bar), especially at about 20 °C (1 bar), and usually are paraffinic of nature, while up to 30 wt%, preferably up to 15 wt%, of either olefins or oxygenated compounds may be present.

Depending on the catalyst and the process conditions used in a Fischer-Tropsch reaction, various proportions of normally gaseous hydrocarbons, normally liquid hydrocarbons and optionally normally solid hydrocarbons are obtained. It is often preferred to obtain a large fraction of normally solid hydrocarbons. These solid hydrocarbons may be obtained up to 90 wt% based on total hydrocarbons, usually between 50 and 80 wt%.

A part may boil above the boiling point range of the so-called middle distillates. The term "middle distillates", as used herein, is a reference to hydrocarbon mixtures of which the boiling point range corresponds substantially to that of kerosene and gasoil fractions obtained in a conventional atmospheric distillation of crude mineral oil. The boiling point range of middle distillates generally lies within the range of about 150 to about 360 °C.

The higher boiling range paraffinic hydrocarbons, if present, may be isolated and subjected to a catalytic hydrocracking step, which is known per se in the art, to yield the desired middle distillates. The catalytic hydro-cracking is carried out by contacting the paraffinic hydrocarbons at elevated temperature and pressure and in the presence of hydrogen with a catalyst containing one or more metals having hydrogenation activity, and supported on a support comprising an acidic function. Suitable hydrocracking catalysts include catalysts comprising metals selected from Groups VIB and VIII of the (same) Periodic Table of Elements. Preferably, the hydrocracking catalysts contain one or more noble metals from Group VIII. Preferred noble metals are platinum, palladium, rhodium, ruthenium, iridium and osmium. Most preferred catalysts for use in the hydro-cracking stage are those comprising platinum.

The amount of catalytically active noble metal present in the hydrocracking catalyst may vary within wide limits and is typically in the range of from about 0.05 to about 5 parts by weight per 100 parts by weight of the support material. The amount of non-noble metal present is preferably 5-60%, preferably 10-50%.

Suitable conditions for the catalytic hydrocracking are known in the art. Typically, the hydrocracking is effected at a temperature in the range of from about 175 to 400 °C. Typical hydrogen partial pressures applied in the hydrocracking process are in the range of from 10 to 250 bar.

The product of the hydrocarbon synthesis and consequent hydrocracking suitably comprises mainly normally liquid hydrocarbons, beside water and normally gaseous hydrocarbons. By selecting the catalyst and the process conditions in such a way that especially normally liquid hydrocarbons are obtained, the product obtained ("syncrude") may be transported in the liquid form or be mixed with any stream of crude oil without creating any problems as to solidification and or crystallization of the mixture. It is observed in this respect that the production of heavy hydrocarbons, comprising large amounts of solid wax, are less suitable for mixing with crude oil while transport in the liquid form has to be done at elevated temperatures, which is less desired.

Thus the invention also provides hydrocarbon products synthesised by a Fischer-Tropsch reaction and catalysed by a catalyst regenerated by a process as described herein.

The hydrocarbon may have undergone the steps of hydroprocessing, preferably hydrogenation, hydroisomerisation and/or hydrocracking.

The hydrocarbon may be a fuel, preferably naphtha, kerosene or gasoil, a waxy raffinate or a base oil.

Any percentage mentioned in this description is calculated on total weight or volume of the composition, unless indicated differently. When not mentioned, percentages are considered to be weight percentages. Pressures are indicated in bar absolute, unless indicated differently.

## Claims

1. A process for the regeneration of a cobalt-based catalyst having sulphur contaminants, the process comprising:
contacting said catalyst with a stream containing steam and oxygen, the stream being at a pressure of 5-80 bar and at a temperature of 100-400 °C;
thus converting the sulphur contaminants to soluble compounds.

2. A process as claimed in claim 1, wherein the soluble compounds agglomerate.

3. A process as claimed in either preceding claim, wherein the resulting soluble compounds are removed.

4. A process as claimed in claim 3, wherein the soluble compounds are removed by contact with a solvent such as water, especially a water/hydrocarbon emulsion.

5. A process as claimed in claim 4, wherein the solvent is at a temperature of 20-100 °C.

6. A process as claimed in any preceding claim, wherein the sulphur contaminants comprise cobalt sulphide.

7. A process as claimed in any preceding claim, wherein the soluble compounds comprise cobalt sulphate.

8. A process as claimed in any preceding claim, wherein the temperature of the stream is between 150-350 °C, preferably 200-300 °C.

9. A process as claimed in any preceding claim, wherein the pressure of the stream is 10-70 bar, preferably 40-70 bar, especially around 60 bar.

10. A process as claimed in any preceding claim, wherein the stream is saturated with the steam.

11. A process as claimed in any preceding claim, wherein the regeneration is carried out in a Fischer-Tropsch reactor.

12. A process as claimed in any preceding claim, wherein the cobalt is supported on a porous refractory metal oxides, especially silica, alumina and titania.

13. A process as claimed in any preceding claim, wherein the catalyst comprises a manganese or zirconium promoter.

14. A process for the production of liquid hydrocarbons from synthesis gas, the process comprising:
- converting synthesis gas in a reactor into liquid hydrocarbons, and optionally solid hydrocarbons and optionally liquefied petroleum gas, at elevated temperatures and pressures;
- pausing said conversion of the synthesis gas;
- regenerating the catalyst by a process as claimed in any preceding claim;
- continuing said conversion of the synthesis gas.

15. A process as claimed in claim 14, wherein the regeneration is conducted in the same reactor as the conversion of the synthesis gas.

16. Hydrocarbon products synthesised by a Fischer-Tropsch reaction and catalysed by a catalyst regenerated by a process as claimed in any one of claims 1 to 13.

17. Hydrocarbon products as claimed in claim 16, wherein the hydrocarbon products have undergone the steps of hydroprocessing, preferably hydrogenation, hydroisomerisation and/or hydrocracking.

18. Hydrocarbon products as claimed in claim 16 or claim 17, wherein the hydrocarbon products are a fuel, preferably naphtha, kerosene or gasoil, a waxy raffinate or a base oil.
